# EUROPEAN PATENT APPLICATION

(11) **EP 4 325 681 A2**
(43) Date of publication of application: **21.02.2024**
(21) Application number: 23188971.8
(22) Date of filing: 01.08.2023
(51) Int. Cl.: H02H 7/18

(54) **ENERGY STORAGE DEVICE AND BATTERY CABINET**

(30) Priority: 15.08.2022 CN 202222148376 U
(71) Applicant: Sungrow Power Supply Co., Ltd., Hefei, Anhui 230088 (CN)
(72) Inventor: Yin, Xudong, Hefei, 230088 (CN); Chen, Fei, Hefei, 230088 (CN); Wang, Lin, Hefei, 230088 (CN)
(74) Representative: Epping - Hermann - Fischer

(57) **Abstract**

An energy storage device and a battery cabinet are provided according to the present disclosure. The energy storage device includes a plurality of battery clusters and a high-voltage switch box. A positive input terminal of the high-voltage switch box is connected to positive electrodes of the plurality of battery clusters, a negative input terminal of the high-voltage switch box is connected to negative electrodes of the plurality of battery clusters, and an output terminal of the high-voltage switch box is configured to connect an electrical device. The high-voltage switch box is configured to control the plurality of battery clusters to be electrically connected to/disconnected from the electrical device. The cost of a battery cabinet is reduced in the present disclosure.

## Description

### FIELD

The present disclosure relates to the field of energy storage technology, and in particular to an energy storage device and a battery cabinet.

### BACKGROUND

A battery cabinet is mainly composed of battery packs, high-voltage switch boxes, liquid cooling units and some fire-fighting equipment. The battery packs are mainly installed in series, where a short circuit may occur during the installation process. The high-voltage switch box is mainly composed of switch-type electrical devices, connectors, and battery management controllers. It can disconnect the high-voltage output of the battery in time and also provide short circuit protection for the battery packs.

In the conventional technology, since a battery cabinet includes multiple battery packs, multiple high-voltage switch boxes are required for short circuit protection, causing the battery cabinet system is large in size and occupies a significant area. As a result, the battery cabinet is of low capacity density with a high cost, which does not meet the market demand for a battery cabinet with a low cost.

### SUMMARY

An object of the present disclosure is to provide an energy storage device and a battery cabinet, which can reduce the cost of the battery cabinet.

In order to achieve the above object, an energy storage device is provided according to the present disclosure, the energy storage device includes:
a plurality of battery clusters;
a high-voltage switch box, a positive input terminal of the high-voltage switch box is connected to positive electrodes of the plurality of battery clusters, a negative input terminal of the high-voltage switch box is connected to negative electrodes of the plurality of battery clusters, and an output terminal of the high-voltage switch box is configured to connect an electrical device; and
the high-voltage switch box is configured to control the plurality of battery clusters to be electrically connected to/disconnected from the electrical device.

In an embodiment, the high-voltage switch box includes a short circuit/overload protection circuit;
wherein the short circuit/overload protection circuit is arranged in series between the plurality of battery clusters and the electrical device, and the short circuit/overload protection circuit is configured to control the plurality of battery clusters to be electrically disconnected from the electrical device in response to any one of the battery clusters being in an overload state or in a short circuit state.

In an embodiment, the high-voltage switch box includes a fuse, and the fuse is arranged in series between the positive electrodes of the battery clusters and a positive terminal of the electrical device; and/or the fuse is arranged in series between the negative electrodes of the battery clusters and a negative terminal of the electrical device.

In an embodiment, the fuse includes a first fuse and a second fuse;
a first terminal of the first fuse is connected to the positive electrodes of the plurality of battery clusters, and a second terminal of the first fuse is connected to the positive terminal of the electrical device; and
a first terminal of the second fuse is connected to the negative electrodes of the plurality of battery clusters, and a second terminal of the second fuse is connected to the negative terminal of the electrical device.

In an embodiment, the first fuse is an overload protection fuse, and the second fuse is a short circuit protection fuse; or
the first fuse is a short circuit protection fuse, and the second fuse is an overload protection fuse.

In an embodiment, the high-voltage switch box further includes a load switch, a positive input terminal of the load switch is connected to the positive electrodes of the plurality of battery clusters, and a negative input terminal of the load switch is connected to the negative electrodes of the plurality of battery clusters, and an output terminal of the load switch is configured to connect the electrical device; and
the load switch is configured to control the plurality of battery clusters to be electrically connected to/disconnected from the electrical device.

In an embodiment, the high-voltage switch box further includes: contactors, wherein,
each battery cluster is provided with at least one contactor, a first terminal of the contactor is connected to the battery cluster, and a second terminal of the contactor is configured to connect to the electrical device; and
the contactor is configured to control the battery cluster to be electrically connected to/disconnected from the electrical device.

In an embodiment, the high-voltage switch box further includes: shunts, wherein,
each battery cluster is provided with at least one shunt, a first terminal of the shunt is connected to the negative electrode of the battery cluster, and a second terminal of the shunt is configured to connect to a negative terminal of the electrical device; and the shunt is configured to detect an output current of the battery cluster.

In an embodiment, the battery cluster includes a plurality of battery packs, and the plurality of battery packs are arranged in series.

In an embodiment, the energy storage device further includes at least one third fuse, and the at least one third fuse is arranged in series between any two battery packs that are adjacently arranged in the battery cluster.

A battery cabinet is provided according to the present disclosure, the battery cabinet includes the above energy storage device.

Battery clusters and a high-voltage switch box are provided according to the present disclosure. There are multiple battery clusters, a positive input terminal of the high-voltage switch box is connected to positive electrodes of the multiple battery clusters, a negative input terminal of the high-voltage switch box is connected to negative electrodes of the multiple battery clusters, and an output terminal of the high-voltage switch box is configured to connect an electrical device. The high-voltage switch box is configured to control the multiple battery clusters to be electrically connected to/disconnected from the electrical device. In such embodiment, one high-voltage switch box manages multiple battery clusters. When in use, one high-voltage switch box can simultaneously control multiple battery clusters to be electrically connected to/disconnected from the electrical device. In a scenario that an energy storage device applied to a battery cabinet including multiple battery clusters, the number of high-voltage switch box can be designed to be reduced in the technical solution provided by this embodiment, thereby reducing the size and weight of the energy storage device system and improving the energy density of the energy storage device system. Since the number of high-voltage switch box in the energy storage device is decreased, the cost of the corresponding design is reduced, resulting in a lower operating cost of the energy storage device when in use.

### BRIEF DESCRIPTION OF THE DRAWINGS

In order to explain the technical solutions in the embodiments of the present disclosure or in the conventional technology in detail, the drawings used in the description of the embodiments or the conventional technology are briefly introduced hereinafter. It is apparent that the drawings in the following description illustrate only embodiments of the present disclosure. Other drawings may be obtained by those skilled in the art without creative efforts based on the provided drawings.
Figure 1 is a schematic diagram of function modules of an energy storage device according to an embodiment of the present disclosure;
Figure 2 is a schematic diagram of a circuit structure of an energy storage device according to an embodiment of the present disclosure; and
Figure 3 is a schematic diagram of a circuit structure of an energy storage device according to the conventional technology.

### Explanation of reference signs:

| Signs | Name | Signs | Name |
|---|---|---|---|
| 10 | Battery cluster | 20 | High-voltage switch box |
| Fuse1 | First fuse | Fuse2 | Second fuse |
| Switch | Load switch | Contactor | Contactor |
| Shunt | Shunt | Fuse3 | Third fuse |

The realization of the purpose, functional features and advantages of the present disclosure will be further described in conjunction with the embodiments and with reference to the accompanying drawings.

### DETAILED DESCRIPTION OF EMBODIMENTS

The technical solutions in the embodiments of the present disclosure will be described below in conjunction with the drawings in the embodiments of the present disclosure. It is apparent that the described embodiments are only part of the embodiments of the present disclosure, rather than all of them. Based on the embodiments of the present disclosure, all other embodiments obtained by the skilled in the art without making creative efforts belong to the protection scope of the present disclosure.

It should be noted that if there are directional indications (such as up, down, left, right, front, back...) in the embodiment of the present disclosure, then the directional indications are only used to explain the relative positional relationships, movement conditions and the like between the various components in a certain posture (as shown in the drawings). If such specific posture changes, the directional indications will also change accordingly.

In addition, if there are descriptions involving "first", "second" and the like in the embodiments of the present disclosure, the descriptions of "first", "second" and the like are used for illustration only, rather than indicating or implying their relative importance or implying the number of technical features indicated. Hence, the features defined as "first" and "second" may explicitly or implicitly include at least one such feature. In addition, the technical solutions of the various embodiments may be combined with each other on the premise that those skilled in the art can enable such technical solutions. When the combination of technical solutions is contradictory or cannot be realized, it should be considered that the combination of technical solutions does not exist, which is also not within the protection scope claimed in the present disclosure.

An energy storage device is provided according to the present disclosure.

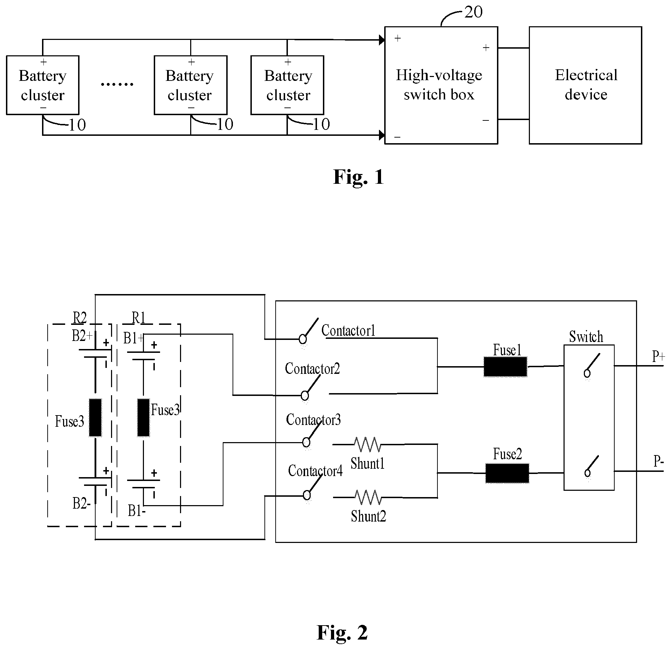

Referring to Figure 1, in an embodiment of the present disclosure, the energy storage device includes multiple battery clusters 10 and a high-voltage switch box 20. A positive input terminal of the high-voltage switch box 20 is connected to positive electrodes of the multiple battery clusters 10, a negative input terminal of the high-voltage switch box 20 is connected to negative electrodes of the multiple battery clusters 10, and an output terminal of the high-voltage switch box 20 is configured to connect an electrical device.

The high-voltage switch box 20 is configured to control the multiple battery clusters 10 to be electrically connected to/disconnected from the electrical device.

In this embodiment, the battery cluster 10 may be provided with multiple battery packs arranged in series and/or in parallel. In this embodiment, the battery cluster 10 may be multiple battery packs arranged in series. A battery pack may be packaged with multiple single cells connected in series and/or in parallel to become an energy source for various electronic devices. The single battery pack may use lithium batteries, nickel-cadmium batteries or nickel-hydrogen batteries. Different batteries may be selected according to the actual power supply requirements. For example, lithium batteries may be selected for small power consumption, while nickel-cadmium battery or nickel-hydrogen batteries may be selected for large power consumption. When the battery cluster 10 is in electrical communication with the electrical device, the battery cluster 10 provides electrical energy to the electrical device.

The high-voltage switch box 20 is arranged in series between the battery clusters 10 and the electrical device, and may be implemented by using switch-type electrical devices, connectors, battery management controllers, etc. The high-voltage switch box 20 may serve as the function of controlling the energy storage device to supply power to the electrical device for the power generation, transmission, distribution, electrical energy conversion and consumption in the power system. Specifically, when the high-voltage switch box 20 controls the battery clusters 10 to be electrically connected to the electrical device, the battery clusters 10 provide electrical energy to the electrical device. When the high-voltage switch box 20 controls the battery clusters 10 to be electrically disconnected from the electrical device, the battery clusters 10 stop supplying electrical energy to the electrical device.

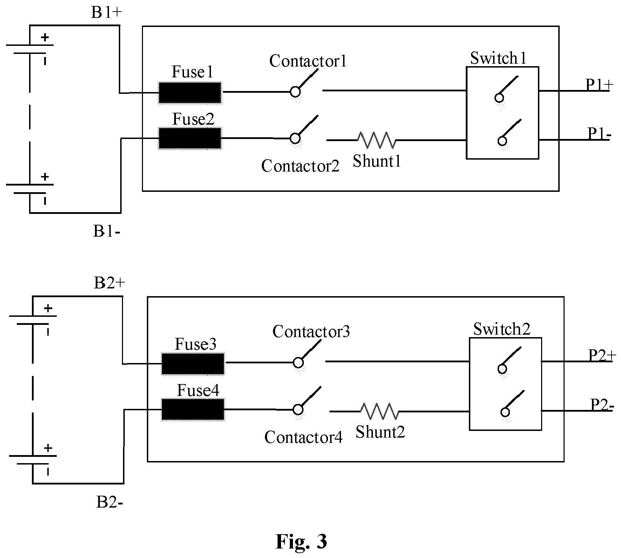

Figure 3 illustrates a safety protection solution commonly used for energy storage devices in a battery cabinet in the conventional technology. High-voltage switch boxes 20 are used to control and protect the battery clusters 10, where each battery cluster 10 corresponds to a high-voltage switch box 20. In practical applications, since a battery cabinet often includes multiple battery clusters 10, multiple switch boxes are required, which increases the size and weight of the system and reduce the energy density of the system.

In view of this, in this embodiment, a positive input terminal of one high-voltage switch box is connected to the positive electrodes of multiple battery clusters 10, and a negative input terminal of the high-voltage switch box 20 is connected to the negative electrodes of the multiple battery clusters 10. One high-voltage switch box 20 manages multiple battery clusters 10. When in use, one high-voltage switch box 20 can control the multiple battery clusters 10 to be electrically connected to/disconnected from the electrical device. When the high-voltage switch box 20 controls the battery clusters 10 to be electrically connected to the electrical device, the multiple battery clusters 10 provide electrical energy to the electrical device. When the high-voltage switch box 20 controls the battery clusters 10 to be electrically disconnected from the electrical device, the multiple battery clusters 10 stops providing electrical energy to the electrical device simultaneously. Compared with the operating solution in which each battery cluster corresponds to one high-voltage switch box 20, the number of high-voltage switch boxes 20 of the energy storage device in the battery cabinet is reduced in this embodiment.

It should be noted that when the high-voltage switch box 20 controls the battery clusters 10 to be electrically connected to the electrical device, the battery clusters 10 do not necessarily provide electrical energy to the electrical device, rather, the amount of electrical energy provided by the battery clusters 10 to the electrical device depends on the actual operating situation of the electrical device.

For example, in a case that one battery cluster can meet the electrical energy required by the electrical device, and the high-voltage switch box 20 controls multiple battery clusters 10 to be electrically connected to the electrical device, only one battery cluster supplies power to the electrical device, while the rest battery clusters connected to the electrical device do not supply power to the electrical device. In a case that multiple battery clusters are required to meet the electrical energy required by the electrical device, the multiple battery clusters connected to the electrical device supply power to the electrical device.

In the present disclosure, battery clusters 10 and a high-voltage switch box 20 are provided, where multiple battery clusters 10 are provided, and the positive input terminal of the high-voltage switch box 20 is connected to the positive electrodes of multiple battery clusters 10, and the negative input terminal of the high-voltage switch box 20 is connected to the negative electrodes of multiple battery clusters 10, the output terminal of the high-voltage switch box 20 is used to connect the electrical device, and the high-voltage switch box 20 is used to control the multiple battery clusters 10 to be electrically connected to/disconnected from the electrical device. In this embodiment, one high-voltage switch box 20 manages multiple battery clusters 10. When in use, one high-voltage switch box 20 can simultaneously control multiple battery clusters 10 to be electrically connected to/disconnected from electrical device. For the energy storage device applied to a battery cabinet including multiple battery clusters 10 in the technical solution provided by this embodiment, the number of high-voltage switch boxes 20 is reduced compared to the conventional energy storage device, thereby reducing the size and weight of the energy storage device system and improving the energy density of the energy storage device system. Since the number of high-voltage switch boxes 20 in the energy storage device is decreased, the cost of design is reduced, and an operating cost of the energy storage device is reduced. Hence, the cost of the battery cabinet is reduced.

Referring to Figure 2, in an embodiment, the high-voltage switch box 20 includes a short circuit/overload protection circuit.

The short circuit/overload protection circuit is arranged in series between the multiple battery clusters 10 and the electrical device, and the short circuit/overload protection circuit is configured to control the multiple battery clusters 10 to be electrically disconnected from the electrical device in a case that any one of the battery clusters 10 is in an overload state or in a short circuit state.

In this embodiment, during the operating process of the battery cluster, a short circuit may be formed due to small resistance between the positive and negative electrodes of the battery cluster caused by wrong connection. In this case, when the battery cluster supplies power to the electrical device and the output power of the battery cluster is higher than the rated value, the temperature of the electrical device will be increased, causing the insulation aging of the electrical device, which shortens the service life of the electrical device, while the battery cluster is in the overload operating state.

The short circuit/overload protection circuit protects the battery cluster to prevent the battery cluster from being in a short circuit or overload operating state. The short circuit/overload protection circuit can use a battery management controller. The battery management controller detects whether the battery cluster 10 is in a short circuit/overload state by detecting the output current or voltage of the battery cluster 10. Based on detecting that the battery cluster 10 is in a short circuit/overload state, the battery cluster 10 is controlled to be disconnected from the electrical device to protect the battery cluster 10. For example, whether the battery cluster 10 is in a short circuit state is detected by detecting the voltage between the positive electrode and negative electrode of the battery cluster 10. When the battery cluster 10 is in a short circuit, the voltage between the two ends of the battery cluster 10 is extremely small, and the battery management controller controls the battery cluster 10 to be disconnected from the electrical device. Alternatively, whether the battery cluster 10 is in a short circuit or overload state is detected by detecting the output current of the battery cluster. When the battery cluster 10 is in a short circuit or overload state, the output current of the battery cluster is relatively large. In a case that the battery management controller detects that the output current of the battery cluster is greater than a preset current, the battery management controller controls the battery cluster 10 to be disconnected from the electrical device.

The short circuit/overload protection circuit may include a fuse. When the battery cluster 10 is in a short circuit or overload state, the output current of the battery cluster 10 is too large to cause the fuse to be blown, so that the multiple battery clusters 10 are electrically disconnected from the electrical device, to protect the battery clusters 10.

Referring to Figure 2, in an embodiment, the short circuit/overload protection circuit includes a fuse, and the fuse is arranged in series between the positive electrodes of the battery clusters and the positive terminal of the electrical device, and/or, the fuse is arranged in series between the negative electrodes of the battery clusters and the negative terminal of the electrical device.

In an embodiment, the fuse includes a first fuse Fuse1 and a second fuse Fuse2.

A first terminal of the first fuse Fuse1 is connected to the positive electrodes of the multiple battery clusters, and a second terminal of the first fuse Fuse1 is connected to the positive terminal of the electrical device.

A first terminal of the second fuse Fuse2 is connected to the negative electrodes of the multiple battery clusters, and a second terminal of the second fuse Fuse2 is connected to the negative terminal of the electrical device.

In this embodiment, after the current flowing through the fuse exceeds a specified value for a period of time, the fusing portion of the fuse will be melted by the heat generated by itself, thereby disconnecting the circuit.

The first fuse Fuse1 is arranged between the positive electrodes of the battery clusters 10 and the electrical device. When the battery cluster 10 is in a short circuit/overload state and the current flowing through the fuse is greater than a preset current value, the fusing portion of the fuse will be melted by the heat generated by itself, so that the positive electrodes of the battery cluster 10 are electrically disconnected from the electrical device. The second fuse Fuse2 is arranged between the negative electrodes of the battery clusters 10 and the electrical device. When the battery cluster 10 is in a short circuit/overload state and the current flowing through the fuse is greater than a preset current value, the fusing portion of the fuse will be melted by the heat generated by itself, so that the negative electrodes of the battery cluster 10 are electrically disconnected from the electrical device.

Referring to Figure 2, in an embodiment, the first fuse Fuse1 is an overload protection fuse, the second fuse Fuse2 is a short circuit protection fuse. Alternatively, the first fuse Fuse1 is a short circuit protection fuse, and the second fuse Fuse2 is an overload protection fuse.

The overload protection fuse is blown when any one of the battery clusters 10 is in an overload state, so as to control the multiple battery clusters 10 to be electrically disconnected from the electrical device.

The short circuit protection fuse is blown when any one of the battery clusters 10 is in a short circuit state, so as to control the multiple battery clusters 10 to be electrically disconnected from the electrical device.

In this embodiment, one of the first fuse Fuse1 and the second fuse Fuse2 is a short circuit protection fuse, and the other is an overload protection fuse. The overload protection fuse may be a PV type fuse, and the short circuit protection fuse may be an AR type fuse.

The fuse has anti-delay characteristic, i.e., the blowing time is long when the overload current is small and the blowing time is short when the overload current is large. Therefore, if the current is within a certain overload current range and then returns to normal, the fuse will not be blown and can continue to be used. Fuses have various blowing characteristic curves, which can meet the requirements of different types of protected objects. When the battery cluster 10 is in the short circuit state, the short circuit protection fuse is blown within ms and the overload protection fuse is unblown. When the current is overloaded, the overload protection fuse is blown and the short circuit protection fuse is unblown. Hence, by including a short circuit protection fuse and an overload protection fuse, the high-voltage switch box 20 can realize the overload protection and short circuit protection of the battery clusters 10 at the same time.

Referring to Figure 2, in an embodiment, the high-voltage switch box 20 further includes a load switch Switch. A positive input terminal of the load switch Switch is connected to the positive electrodes of the multiple battery clusters 10, a negative input terminal of the load switch Switch is connected to the negative electrodes of the multiple battery clusters 10, and an output terminal of the load switch Switch is used to connect the electrical device.

The load switch Switch is used to control the multiple battery clusters 10 to be electrically connected to/disconnected from the electrical device.

In this embodiment, the load switch Switch is provided with a simple arc extinguishing device, which is used to turn off or on the load current. The load switch Switch controls the battery clusters 10 to be electrically connected to the electrical device by turning on the load current. The load switch Switch controls the battery clusters 10 to be electrically disconnected from the electrical device by turning off the load current.

Referring to Figure 2, in an embodiment, the high-voltage switch box 20 further includes contactors Contactor. Each battery cluster 10 is provided with at least one contactor, a first terminal of the contactor is connected to the battery cluster 10, and a second terminal of the contactor is used to connect to the electrical device.

The contactor is used to control the multiple battery clusters 10 to be electrically connected to/disconnected from the electrical device.

In this embodiment, the contactor is used to control the battery cluster 10 to be electrically connected to/disconnected from the electrical device. When the battery cluster 10 is in use, the contactor controls the battery cluster 10 to be connected to the electrical device. When the battery cluster 10 is not in use, the contactor controls the battery cluster 10 to be disconnected from the electrical device.

After the coil of the contactor is energized, the coil current will generate a magnetic field, and the generated magnetic field will cause the static iron core to generate electromagnetic force to attract the moving iron core and drive the contact of the alternating current contactor to act, so that the contactor controls the electrical device to be connected to the battery cluster 10. When the coil is de-energized, the electromagnetic force disappears, and the electromagnet core is released under the action of the release spring, so that the contactor controls the electrical device to be disconnected from the battery cluster 10.

Identical contactors are placed on the positive and negative electrodes of each battery cluster 10 respectively. In this way, in a case that contact sticking occurs for one contactor, the other contactor may also disconnect from the high voltage of the system.

Referring to Figure 2, in an embodiment, the high-voltage switch box 20 further includes shunts Shunt. Each battery cluster 10 is provided with at least one shunt. A first terminal of the shunt is connected to the negative electrode of the battery cluster 10, and a second terminal of the shunt is used to connect to a negative terminal of the electrical device.

The shunt is used to detect the output current of the battery cluster 10.

In this embodiment, the shunt is an instrument for measuring direct current, which is made according to the principle that a voltage is generated at two ends of a resistor when the direct current flows through the resistor. The shunt is used to detect the output current of the battery cluster 10.

Referring to Figure 2, in an embodiment, the battery cluster 10 includes multiple battery packs, and the multiple battery packs are arranged in series.

In this embodiment, the battery cluster 10 includes multiple battery packs arranged in series. The battery cluster 10 is designed to be expandable, and the energy of the battery cluster 10 can be expanded by connecting multiple battery packs in series.

Referring to Figure 2, in an embodiment, the energy storage device further includes at least one third fuse, and the third fuse is arranged in series between any two battery packs that are adjacently arranged in the battery cluster.

In this embodiment, the third fuse Fuse3 can be an AR-type fuse to realize the short circuit protection of the battery packs in the battery cluster 10. Each battery cluster 10 is provided with at least one AR-type fuse disposed close to the middle of the battery cluster 10, which can reduce arc flash energy and reduce the risk of electrical shock to personnel.

The third fuse Fuse3 is arranged in the middle of the battery pack 10, for example, the number of battery packs in the battery cluster 10 is 2N , and the third fuse Fuse3 is arranged between the (N-1)th battery pack and the Nth battery pack or the Nth battery pack and the (N+1)th battery pack. The number of battery packs in the battery cluster 10 is 2N+1, and the third fuse Fuse3 is arranged between the (N-1)th battery pack and the Nth battery pack or between the Nth battery pack and the (N+1)th battery pack.

Referring to Figure 2, in an embodiment, the high-voltage switch box 20 includes a load switch Switch, a first fuse Fuse1 and a second fuse Fuse2.

The positive and negative terminals of the high-voltage switch box 20 are provided with contactors respectively, the negative terminal is provided with shunts, the positive and negative terminals connected in parallel are connected to fuses and load switch Switch. In a case that one high-voltage switch box 20 manages N battery clusters 10, there are 2N contactors and N shunts.

As an example, a high-voltage switch box 20 manages two battery clusters 10, the two battery clusters 10 are denoted as R1 and R2, the positive and negative electrodes of R1 are denoted as B1+ and B1- respectively, and the positive and negative electrodes of R2 are denoted as B2+ and B2- respectively. 4 contactors Contactor are provided, which are denoted as Contactor 1-Contactor4 respectively. The positive electrode B1+ of the battery cluster R1 is connected to the first terminal of the Contactor2, the positive electrode B2+ of the battery cluster R2 is connected to the first terminal of the Contactor1. The negative electrode B1- of the battery cluster R1 is connected to the first terminal of the Contactor3. The negative electrode B2- of the battery cluster R2 is connected to the first terminal of the Contactor4. The second terminal of the Contactor1 and the second terminal of the Contactor2 are connected to the first terminal of the first fuse Fuse1, and the first fuse Fuse1 is connected to the positive input terminal of the load switch Switch, and the second terminal of the Contactor3 is connected to the first terminal of Shunt1. The second terminal of the Contactor4 is connected to the first terminal of Shunt2, the second terminal of Shunt1 and the second terminal of Shunt2 are connected to the first terminal of the second fuse Fuse2, and the second terminal of the second fuse Fuse2 is connected to the negative input terminal of the load switch Switch. The positive output terminal P+ of the load switch Switch is connected to the positive terminal of the electrical device, and the negative output terminal P- is connected to the negative terminal of the electrical device.

A battery cabinet is provided according to the present disclosure, which includes the above energy storage device. Since all the technical solutions of all the above embodiments can be applied to the battery cabinet in the present disclosure, the battery cabinet at least has all the beneficial effects of the technical solutions of the above embodiments, which will not be repeated here.

The above descriptions are only optional embodiments of the present disclosure, which do not limit the patent scope of the present disclosure. Under the concept of the present disclosure, any equivalent structural variations made by using the specification of the present disclosure and the contents of the drawings, or direct/indirect applications in other related technical fields are included in the patent protection scope of the present disclosure.

## Claims

1. An energy storage device, comprising:
a plurality of battery clusters;
a high-voltage switch box, a positive input terminal of the high-voltage switch box is connected to positive electrodes of the plurality of battery clusters, a negative input terminal of the high-voltage switch box is connected to negative electrodes of the plurality of battery clusters, and an output terminal of the high-voltage switch box is configured to connect an electrical device; and
the high-voltage switch box is configured to control the plurality of battery clusters to be electrically connected to/disconnected from the electrical device.

2. The energy storage device according to claim 1, wherein the high-voltage switch box comprises a short circuit/overload protection circuit;
wherein the short circuit/overload protection circuit is arranged in series between the plurality of battery clusters and the electrical device, and the short circuit/overload protection circuit is configured to control the plurality of battery clusters to be electrically disconnected from the electrical device in response to any one of the battery clusters being in an overload state or in a short circuit state.

3. The energy storage device according to one of the previous claims, wherein the high-voltage switch box comprises a fuse,
the fuse is arranged in series between the positive electrodes of the battery clusters and a positive terminal of the electrical device; and/or the fuse is arranged in series between the negative electrodes of the battery clusters and a negative terminal of the electrical device.

4. The energy storage device according to claim 3, wherein the fuse comprises a first fuse and a second fuse;
a first terminal of the first fuse is connected to the positive electrodes of the plurality of battery clusters, and a second terminal of the first fuse is connected to the positive terminal of the electrical device; and
a first terminal of the second fuse is connected to the negative electrodes of the plurality of battery clusters, and a second terminal of the second fuse is connected to the negative terminal of the electrical device.

5. The energy storage device according to one of claims 3 or 4, wherein the first fuse is an overload protection fuse and the second fuse is a short circuit protection fuse; or the first fuse is a short circuit protection fuse and the second fuse is an overload protection fuse.

6. The energy storage device according to one of the previous claims, wherein the high-voltage switch box further comprises a load switch, a positive input terminal of the load switch is connected to the positive electrodes of the plurality of battery clusters, and a negative input terminal of the load switch is connected to the negative electrodes of the plurality of battery clusters, and an output terminal of the load switch is configured to connect the electrical device; and
the load switch is configured to control the plurality of battery clusters to be electrically connected to/disconnected from the electrical device.

7. The energy storage device according to one of the previous claims, wherein the high-voltage switch box further comprises: contactors, wherein
each battery cluster is provided with at least one contactor, a first terminal of the contactor is connected to the battery cluster, and a second terminal of the contactor is configured to connect to the electrical device; and
the contactor is configured to control the battery cluster to be electrically connected to/disconnected from the electrical device.

8. The energy storage device according to one of the previous claims, wherein the high-voltage switch box further comprises: shunts, wherein
each battery cluster is provided with at least one shunt, a first terminal of the shunt is connected to the negative electrode of the battery cluster, and a second terminal of the shunt is configured to connect to a negative terminal of the electrical device; and
the shunt is configured to detect an output current of the battery cluster.

9. The energy storage device according to one of the previous claims, wherein the battery cluster comprises a plurality of battery packs, and the plurality of battery packs are arranged in series.

10. The energy storage device according to one of the previous claims, wherein the energy storage device further comprises at least one third fuse, and the at least one third fuse is arranged in series between any two battery packs that are adjacently arranged in the battery cluster.

11. A battery cabinet, wherein the battery cabinet comprises the energy storage device according to any one of claims 1-10.
